# DEMANDE DE BREVET EUROPEEN

(11) **EP 1 736 400 A2**
(43) Date de publication de la demande: **27.12.2006**
(21) Numéro de dépôt: 06425387.5
(22) Date de dépôt: 07.06.2006
(51) Int. Cl.: B62K 5/00, B62K 11/00, B62K 15/00

(54) **Véhicule pliable à trois roues et à moteur électrique, alimenté par deux accumulateurs chargés par un panneau solaire mono-cristallin**

(30) Priorité: 09.06.2005 IT VT20050002
(71) Demandeur: Francola, Giovanni, 01034 Fabrica di Roma VT (IT); Riucci, Domenico, 01034 Fabrica di Roma VT (IT); Iacurto, Dominico, 01034 Fabrica di Roma VT (IT); Testa, Giovanni, 01100 Viterbo VT (IT); Cogoni, Manolo, 01034 Fabrica di Roma VT (IT)
(72) Inventeur: Francola, Giovanni, 01034 Fabrica di Roma VT (IT); Riucci, Domenico, 01034 Fabrica di Roma VT (IT); Iacurto, Dominico, 01034 Fabrica di Roma VT (IT); Testa, Giovanni, 01100 Viterbo VT (IT); Cogoni, Manolo, 01034 Fabrica di Roma VT (IT)

(57) **Abrégé**

Le véhicule à moteur électrique (9) comprenant trois roues est pliable. En position pliée il peut être tiré comme une valise-trolley et rangé dans un coffre de voiture. L'énergie nécessaire au moteur est fournie par deux accumulateurs (7,8), chargés de manière alternée, par un panneau solaire (A) positionné sur le devant du véhicule et fixé sur le châssis. Lorsqu'un des accumulateurs (7,8) ne peut plus fournir d'énergie, l'autre le remplace automatiquement et, en même temps, le premier est rechargé totalement par le panneau solaire (A). Le véhicule est conduit à l'aide d'un guidon relié à la roue avant; après avoir plié et fermé le véhicule, la selle est posée dans une cavité. Après avoir ouvert le véhicule, la selle se bloque en une position définie. Le véhicule peut être rechargé par les réseaux électriques des immeubles. Enfin, il a un système de fermeture avec serrure.

## Description

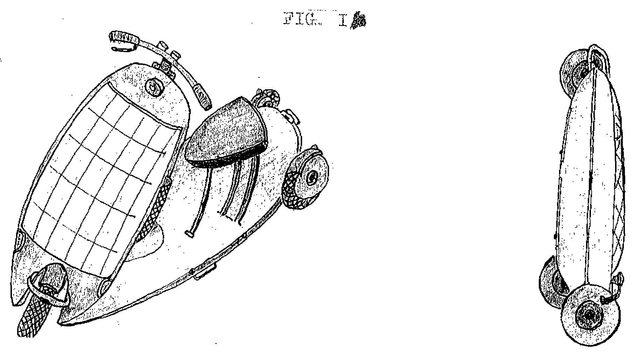

Comme est illustré dans le dessin [Fig.1], la forme e le système de ouverture et de fermeture du véhicule, consentent de rendre le véhicule même prêt pour être activé, seulement avec une action faite avec les mains.

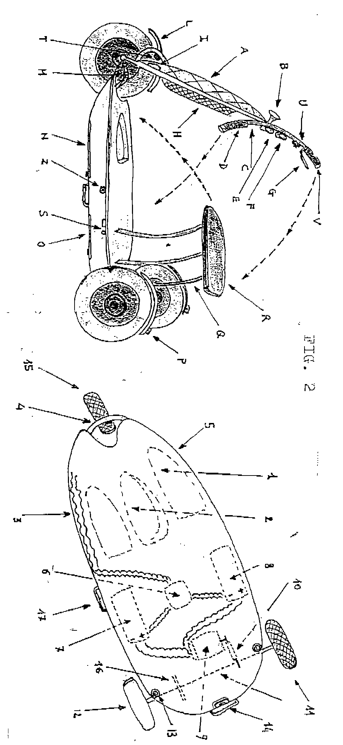

Ce véhicule, à cause de sa pétite taille et de son pétit poids, après avoir été plié et fermé par une poignée positionée au dessus de la roue antérieure [voir Fig. 2 (4)], peut être mis en position vertical et trainé par ses propres roues postérieures.

Positionné dans la meme poignée il y a un bouton, qui permet d'agir sur un embrayage que dégage le roues postérieures de la transmission du moteur.

Le moteur du véhicule est électrique [Fig. 2 (9)] et il est connecté à un inverter [Fig. 2 (6)]; le inverter est connecté à deux accumulateurs qui fournissent l'énergie pour faire fonctionner le moteur même.

Avec un système de régulation de charge, les deux accumulateurs sont chargés, en manière alternée, par un panneau solaire mono-cristallin concave, positionné sur le devant du véhicule, que a la taille de 50x70 cm, 12 V et autour de 40 Watt [Fig. 2 (a)]. Tel panneau peut être désactivé par un bouton [Fig. 2 (z)].

Par le système susmentionné, quand un accumulateur ne peut plus fournir électricité au moteur, il est remplacé automatiquement par l'autre accumulateur et, au même temps, il est totalement re-chargé par le panneau solaire.

Le panneau susmentionné est fixé sur le châssis du vehicule et peut être remplacé lorsque ça est nécessaire.

Comme est expliqué dans la description, le vehicule est un vélomoteur avec trois roues, deux postérieures (dont une motrice et l'autre indépendante) et une antérieure, laquelle permet de conduire le véhicule même. Tous deux les roues sont couvertes avec ailes [Fig. 2 (I/12)].

Par un guidon, la roue antérieure [Fig. 2 (c)] permet de conduire le véhicule et de le freiner par une levier-frein, illustrée dans le point G. Sur le même guidon son positionnés: un compteur kilométrique [Fig. 2 (f)], un mesureur de charge [Fig. 2 (e)], un système pour allumer les feux [Fig. 2 (u)] et, en dernier lieu, un régulateur de vitesse [Fig. 2 (v)].

A' l'extrémité du guidon est placé un système pour le support de la roue antérieure avec le relatif aile [Fig. 2 (I)].

Le devant du véhicule, quand est ouvert, est positionné environ à 75 degrés en comparaison du terrain plat-carrosserie et il est bloqué par un système de rotation et blocage [Fig. 2 (m)].

A' l'intérieur du terrain plat vertical du véhicule est placé un porte-bagage (et bourses), obtenu avec un pétit réseau élastique qui économise l'espace.

Sur le terrain plat-carrosserie du véhicule est placé la cavité pour la selle, dans laquelle elle est posée après avoir plié et fermé le véhicule [Fig. 2 (r/2)]. Par un système de bras métalliques basculants on peut positionner et bloquer la selle dans un point défini.

Le véhicule a villebrequins postérieurs et sur la roue antérieure. [Fig. 2 (13)].

Le système de freinage est réalisé par un frein avec adhésif mécanique [Fig. 2 (16)], pendant que la transmission du moteur à la roue motrice est obtenue par courroies et engrenages de réduction, arrangés pour donner une juste vitesse et une adéquate puissance au véhicule.

Tous les fils électriques et les components, électroniques et méchaniques, sont positionnés à l'interieur de la carrosserie du véhicule, à laquelle on peut accéder par trappes de vérification [Fig. 2 (n/o)]. Les trappes susméntionnées sont insérés dans la carrosserie même. Aux côtés du véhicule et à son extrémité postérieure sont positionnées des poignées qui pemettent de le léver lorsque il est en position de fermeture et de le mettre dans le filet de toutes les voitures.

Pour ouvrir le véhicule, dans la poignée postérieure [Fig. 2 (14)] il y a un système de serrure par une clé ou une combinaison électronique.

Le véhicule, en outre, est fourni de feux de position [Fig. 2 (b)] et de feux de diréction [Fig. 2 (p/i)].

Pour ce qui concèrne autres posibilités de charge pour les accumulateurs, le véhicule est fourni de diverses prises électriques, positionnées dans la carrosserie. Ces prises électriques permettent de charger le véhicule dans la voiture et par le réseau électrique des immeubles.

## Revendications

1. Le véhicule dessus décrit, se caractérise parce que, pour sa forme originale, permet de installer et de positionner, avec une inclinaison adéquate, un panneau solaire, fixé sur le châssis frontal. Ce panneau permet de charger, en manière alternée, les deux accumulateurs dont le véhicule est fourni. En conséquence, le véhicule a une haute endurance avant de être re-chargé et, surtout, puisque il est alimenté par énergie solaire, il n'est pas polluant et son coût de maintien est vraiment réduit.

2. Le véhicule se caractérise, en outre, parce que les deux accumulateurs peuvent être chargés pendant qu'il est en marche ou pendant que il est plié et fermé, en position vértical ou horizontal.

3. Puisque le véhicule est avec trois roues, sa stabilité de conduction est plus haute, surtout dans les routes urbaines.

4. A' cause de sa forme et de son contenu poids, le véhicule peut être plié et fermé et garé en position vertical. En outre, par une poignée, il peut être traîné et convoyeuré partout.

5. La poignée est fournie de un système de embrayage que dégage la roue motrice du moteur; ainsi le véhicule devient confortable pour toutes les manoeuvres.

6. A' cause da sa forme et de sa pétite taille, le véhicule, par adequates poignées, peut être pris et mis dans le filet de toutes les voitures ou de tous autres véhicules que peuvent le contenir.

7. Le véhicule, après avoir été ouvert par la serrure de sécurité et bloqué en position de marche, est prêt pour le positionnement de la selle et pour actionner le commande de vitesse, sans faire autres opérations.

8. Pendant que l'éclairage n'est pas suffisant et le panneau solaire n' assure pas la charge de deux accumulateurs, le véhicule est fourni d'un système de charge traditionnel, par prises électriques dans les voitures et dans le réseau électrique des immeubles.
